# EUROPÄISCHE PATENTSCHRIFT

(11) **EP 0 593 611 B1**
(45) Veröffentlichungstag und Bekanntmachung des Hinweises auf die Patenterteilung: **12.06.1996**
(21) Anmeldenummer: 92914956.5
(22) Anmeldetag: 09.07.1992
(51) Int. Cl.: A61C 7/12, A61K 6/06

(54) **ZAHNREGULIERUNGSVORRICHTUNG MIT EINEM KERAMISCHEN ZAHNAUFSATZ**
ORTHODONTIC DEVICE WITH A CERAMIC TOOTH ATTACHMENT
DISPOSITIF ORTHODONTIQUE AVEC FIXATION DENTAIRE EN CERAMIQUE

(30) Priorität: 09.07.1991 AT 1365/91
(43) Veröffentlichungstag der Anmeldung: 27.04.1994
(73) Patentinhaber: Hirsch Advanced Ceramics Gesellschaft m.b.H., A-9020 Klagenfurt (AT)
(72) Erfinder: MOSCHIK, Erich, A-9300 St. Veit/Glan (AT)
(74) Vertreter: Secklehner, Günter, Dr.
(86) Internationale Anmeldenummer: AT9200088
(87) Internationale Veröffentlichungsnummer: WO9300865

(56) Entgegenhaltungen:
- EP-A- 0 189 540
- FR-A- 2 559 059
- US-A- 4 954 080
- US-A- 4 988 293

## Beschreibung

Die Erfindung betrifft eine Zahnregulierungsvorrichtung, wie sie im Oberbegriff des Patentanspruches 1 beschrieben ist.

Bei bekannten Zahnregulierungsvorrichtungen - gemäß US-PS 1 976 141 und US-PS 2 045 025 - werden die Zahnaufsätze aus rostfreiem Stahl gefertigt und sind an einem rostfreien Stahlband befestigt, welches den Zahn umschließt, um den Zahnaufsatz in der richtigen Stellung zu halten.

Verschiedene weitere Zahnregulierungsverfahren und Zahnregulierungsvorrichtungen wurden entwickelt, in welchen rostfreie Zahnaufsätze direkt auf die Zahnoberfläche geklebt werden. Diese Verfahren und Vorrichtungen benötigten kein Band für die Befestigung der Zahnaufsätze. Derartige Systeme werden häufig verwendet. Solche bekannten Zahnregulierungsverfahren und -vorrichtungen sind unter anderem aus den US-Patenten 4 604 057, 4 430 061 und 4 322 206 bekannt. Nachteilig ist das metallische Aussehen derartiger aus rostfreiem Stahl hergestellter Zahnaufsätze. Vom Aussehen her werden daher insbesondere für erwachsene Patienten Zahnregulierungsvorrichtungen gewünscht, die aus nicht metallischem Material bestehen und transparent oder transluszent sind, da derartige Materialien ein besseres, kosmetisches Aussehen ergeben. Dementsprechend werden transparente Kunststoffmaterialien meist Polykarbonate oder transparente bzw. transluszente Keramikmaterialien aus Aluminiumoxid eingesetzt. Bei bekannten aus nicht metallischen Materialien bestehenden Zahnaufsätzen, die um den kosmetischen Einfluß so gering wie möglich zu halten, sehr klein ausgebildet sind, ist es bekannt - gemäß US-PS 4 302 532 - durch Verstärkungselemente die Festigkeit von aus Kunststoffmaterialien hergestellter keramischer Zahnaufsätze zu erhöhen.

Weiters sind Zahnregulierungsvorrichtungen mit einem keramischen Zahnaufsatz aus einem polykristallinen, keramischen Gefüge mit verschiedenen Zuschlagstoffen bekannt. Ein bekannter keramischer Zahnaufsatz - gemäß US-PS 4 954 080 - besteht aus einer polykristallinen Keramik mit einer Lichtdurchlässigkeit im Bereich des sichtbaren Lichtes, die die Sichtbarkeit dieses Zahnaufsatzes herabsetzt, sodaß er, wenn er am Zahn montiert ist, für einen außenstehenden Dritten nahezu nicht zu erkennen ist. Dieser polykristalline Keramikkörper für den keramischen Zahnaufsatz wird durch das Verpressen eines hochreinen Aluminiumoxydpulvers hergestellt, welches anschließend gesintert wird, um nahezu eine Nullporösität und eine durchschnittliche Korngröße im Bereich von 10 bis 30 Mikrometer aufzuweisen. Der Zahnaufsatz soll bevorzugt farblos sein. Eine Lichtdurchlässigkeit im Bereich des sichtbaren Lichtes soll bei einer Probendicke von 0,5 mm 20 bis 60 % betragen. Nachteilig ist bei diesem Zahnaufsatz, daß dieser bei der Vornahme von Röntgenaufnahmen nicht erkennbar ist.

Es ist zwar bereits bekannt - gemäß EP-PS 0 189 540 - einen mikrogefüllten Dentalwerkstoff herzustellen, der eine gute Röntgenopakizität bei gleichzeitig guter Transparenz aufweist. Dieser für Füllungsmaterialen, Dentalzemente, Kronen- und Brückenmaterialien, Protesenmaterialien sowie zur Herstellung von künstlichen Zähnen, von Inlays, Implantaten und Fertigteilen verwendete Dentalwerkstoff besteht aus polymerisierten anorganischen Bindemitteln und Verbindungen der seltenen Edelmetalle sowie gegebenenfalls weiteren anorganischen Verbindungen als Füllstoffe, wobei er auch ein fluoriertes seltenes Erdmetall (Elemente 57 bis 71 des Periodensystems der Elemente) oder ein Gemisch dieser Fluoride enthält. Derartigen Dentalwerkstoffe werden vielfach durch Kneten zu einer Paste vermischt, die unter verschiedenen Bedingungen, insbesondere unter Einwirkung von Licht aushärtet. Die Lichtdurchlässigkeit im Bereich des sichtbaren Lichts für derartige Teile war zwar vielfach ausreichend, sie konnte jedoch für die Verwendung bei Zahnaufsätzen für Zahnregulierungsvorrichtungen nicht befriedigen.

Der vorliegenden Erfindung liegt die Aufgabe zugrunde, eine Zahnregulierungsvorrichtung mit einem keramischen Zahnaufsatz zu schaffen, der eine ausreichende Lichtdurchlässigkeit im Bereich des sichtbaren Lichtes aufweist, um das Erkennen eines derartigen Zahnaufsatzes für einen Dritten möglichst zu vermindern und welcher andererseits ausreichend röntgenopak ist, um einen solchen Zahnaufsatz auf einem Röntgenbild sichtbar zu machen.

Diese Aufgabe der Erfindung wird durch die Merkmale im Kennzeichenteil des Patentanspruches 1 gelöst. Vorteilhaft ist bei dieser Lösung, daß es nunmehr möglich ist, einen aus polykristallinen Körnern bestehenden Zahnaufsatz herzustellen, der röntgenopak und durch entsprechende Sintervorgänge druckfest ausgebildet werden kann, wodurch die röntgensichtbaren Ausscheidungen beim Sinterprozeß zur Herstellung des Zahnaufsatzes gleichzeitig mithergestellt werden können und somit auch eine lange Lebensdauer bei großer Festigkeit aufweist. Wesentlich ist, daß durch die Beisetzung von röntgensichtbaren Ausscheidungen an den Korngrenzen, den polykristallinen Körnern beispielsweise durch die Zumengung von Ytterbiumfluorid ein röntgenopaker Werkstoff erzielt werden kann, dessen Lichtdurchlässigkeit im Bereich des sichtbaren Lichtes dadurch nicht nachteilig beeinflußt wird. Von besonderem Vorteil ist aber bei dieser Ausführungsform nunmehr, daß im Falle eines versehentlichen Verschluckens eines derartigen Zahnaufsatzes oder Teiles dieses Zahnaufsatzes dieser nunmehr am Röntgenbild erkennbar ist und damit im menschlichen Körper jederzeit lokalisiert werden kann, um zu verhindern, daß es durch die scharfen Keramikteile oder Splitter dieser Keramikteile zu inneren Verletzungen im Magen-Darmbereich bzw. in der Luftröhre - der Lunge kommen kann.

Weitere die Eigenschaften eines keramischen Zahnaufsatzes verbessernde Zuschlagstoffe sind im Patentanspruch 2 gekennzeichnet. Durch die Verwendung des Yttrium- bzw. Lanthanaoxydes kann sowohl die Festigkeit erhöht als gleichzeitig auch die Verarbeitungstemperatur vorteilhaft verringert werden.

Eine andere Weiterbildung ist im Patentanspruch 3 angegeben, wodurch die gewünschte Oberflächenqualität bei den Zahnaufsätzen bei ausreichender Festigkeit derselben erzielt werden kann.

Durch eine Ausgestaltung nach Patentanspruch 4 wird erreicht, daß nachträgliche Verfärbungen des Zahnaufsatzes verhindert werden.

Die Ausgestaltung nach Patentanspruch 5 ermöglicht, eine höhere Festigkeit durch Verhinderung des raschen Kornwachstums.

Von Vorteil ist aber auch eine Ausbildung nach Patentanspruch 6, weil dadurch eine höhere Lichtdurchlässigkeit erreicht wird und damit eine optische Fremdkörperwirkung wirkungsvoll vermieden wird.

Eine weitere vorteilhafte Ausbildung beschreibt Patentanspruch 7, wodurch eine Erhöhung der Zähigkeit erreicht wird, und damit die Gefahr des Absplitterns von Teilen der Zahnregulierungsvorrichtung, auf welche die tangentialen Kräfte durch Regulierungselemente einwirken, verhindert wird.

Möglich ist aber auch eine Ausbildung nach Patentanspruch 8, wodurch ein hochzähes Keramikgrundmaterial erreicht wird.

Eine weitere Vorteilhafte Ausbildung beschreibt Patentanspruch 9, wodurch die Grundkeramik eine verbesserte Zähigkeit aufweist und damit ein gleichmäßiger Spannungsverlauf in der Vorrichtung bei Aufnahme von Zugkräften erreicht wird.

Nach einer weiteren vorteilhaften Ausbildung gemäß Patentanspruch 10 wird erreicht, daß ein Keramikteil aus der Kunststoffhalterung gelöst werden kann und dadurch Splitterbildung beim Absprengen vom Zahn vermieden wird und lediglich der Kunststoffkörper von der Zahnoberfläche abzuziehen ist und die Kleberreste zu verschleifen sind.

Es ist aber auch eine Ausbildung nach Patentanspruch 11 von Vorteil, weil dadurch eine in große Stückzahlen kostengünstig herzustellende Vorrichtung erreicht wird.

Möglich ist aber auch eine Ausbildung, wie sie im Patentanspruch 12 beschrieben ist, wodurch eine Vielzahl von Materialkombinationen für eine individuelle Anpassung an spezifische Einsatzzwecke erreicht wird.

Von Vorteil ist aber auch eine Ausbildung nach Patentanspruch 13, weil dadurch eine höhere Festigkeit der Verbindung der Vorrichtung mit dem Zahn in der Klebestelle erreicht wird.

Weiters ist eine Ausbildung nach Patentanspruch 14 möglich, wodurch für den Kleber eine über die Auflagefläche verteilte Dickenstruktur und damit neben der Festigkeit eine entsprechende vorteilhafte Zähigkeit der Klebeverbindung erreicht wird.

Eine weitere vorteilhafte Ausbildung beschreibt Patentanspruch 15, wodurch eine Vielzahl unterschiedlicher Verbindungs-, Übergangs- und Ansatzstellen für die bei einer Regulierung erforderlichen Spannelemente erreicht sind.

Weiters ist eine Ausbildung nach Patentanspruch 16 von Vorteil, wodurch die Lichtdurchlässigkeit weiter erhöht wird.

Möglich ist auch eine vorteilhafte Weiterbildung wie sie im Patentanspruch 17 beschrieben ist, wodurch eine farbliche Anpassung bzw. ein gegensätzlicher Farbeffekt erreicht wird.

Schließlich ist noch eine Ausbildung nach Patentanspruch 18 von Vorteil, weil dadurch die Farbe des transluszenten Grundkörpers einfach angepaßt und verändert werden kann, da durch die Menge und Art des Metalloxydes unter der Reduktionsatmosphäre verschiedene Farben einfach erzielt werden können.

Die Erfindung wird im nachfolgenden anhand der in den Zeichnungen gezeigten Ausführungsbeispiele näher erläutert.

Es zeigen:
- Fig. 1: einen Teil eines Gebisses mit einer darauf angeordneten, erfindungsgemäß ausgebildeten Zahnregulierungsvorrichtung, in schematisch vereinfachter Darstellung;
- Fig. 2: einen Zahnaufsatz der in Fig.1 gezeigten Zahnregulierungsvorrichtung in vergrößerter, schaubildlicher Darstellung;
- Fig. 3: den Zahnaufsatz nach Fig.2 in Stirnansicht geschnitten und stark vergrößertem Maßstab mit schematisch dargestelltem Gefüge;
- Fig. 4: den Zahnaufsatz nach Fig.2 in Seitenansicht;
- Fig. 5: den Zahnaufsatz nach Fig.2 in Draufsicht;
- Fig. 6: den Zahnaufsatz nach Fig.2 in Draufsicht geschnitten;
- Fig. 7: eine andere Ausführungsvariante eines mehrteiligen, erfindungsgemäßen Zahnaufsatzes in Stirnansicht geschnitten;
- Fig. 8: den Zahnaufsatz in Ansicht gemäß Pfeil VIII in Fig.7;
- Fig. 9: ein Teil eines erfindungsgemäßen Zahnaufsatzes geschnitten, in extrem starker Vergrößerung mit dem schematisch dargestellten Gefüge in Draufsicht.

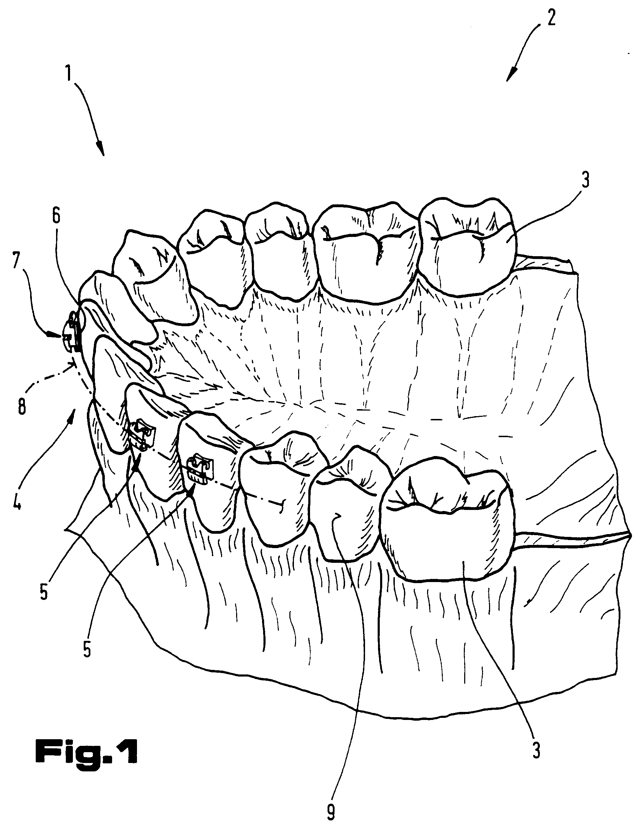

In Fig.1 ist ein Teil eines Unterkiefers 1 mit einem Gebiß 2 aus Zähnen 3

dargestellt. Zur Regulierung von Fehlstellungen der Zähne 3 ist eine Zahnregulierungsvorrichtung 4 angebracht. Diese besteht aus schematisch angedeuteten Zähnaufsätzen 5, die über eine Kleberschicht 6 mit den Zähnen 3 bewegungsverbunden sind. Diese Zahnaufsätze 5 sind mit einer Ausnehmung 7 versehen, in die ein Drahtbügel 8 eingesetzt wird, mit dem die Zähnaufsätze 5 in eine gewünschte Position gezogen werden.

Ist durch die Dauerbelastung auf die Zähne 3 eine Ausrichtung dieser Zähne 3 in die gewünschte Anordnung erzielt, so wird der Drahtbügel 8 entfernt und die Zähnaufsätze 5 werden von einer Oberfläche 9 der Zähne 3 abgesprengt und die Oberfläche 9 der Zähne 3 wird wieder poliert.

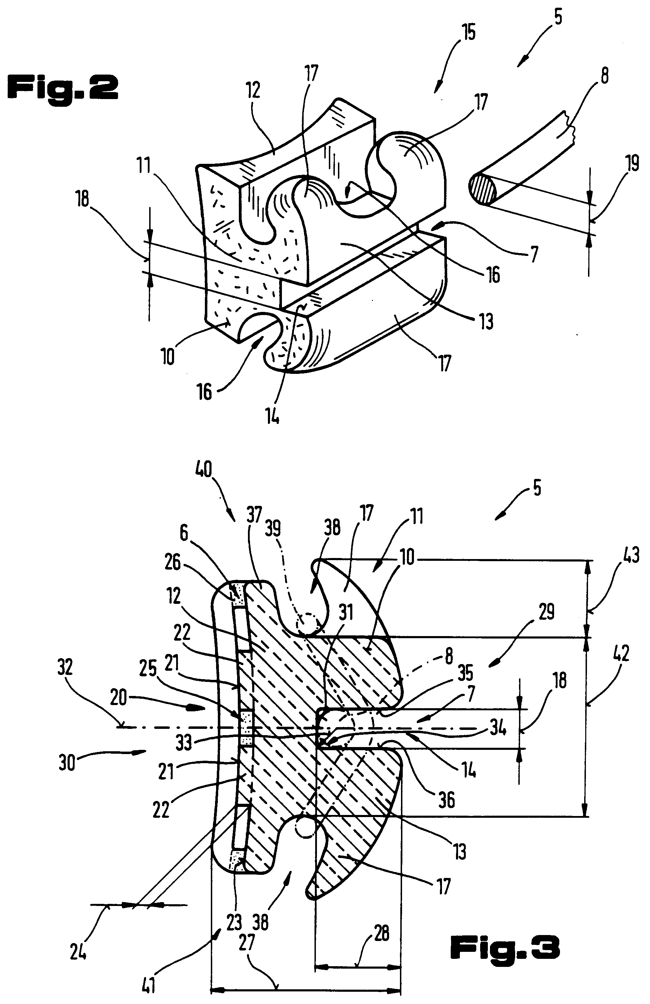

In Fig.2 ist ein derartiger Zähnaufsatz 5 in größerem Maßstab dargestellt, der aus keramischen Material 10 hergestellt ist. Der einstückige Grundkörper 11 des Zahnaufsatzes 5 weist einen Halteteil 12 und einen Führungsteil 13 auf. Der Fühtungsteil 13 ist mit einem Längsschlitz 14 versehen und weist in den Eckbereichen 15 desselben bzw. über die parallel zum Längsschlitz 14 verlaufenden Ausnehmungen 16 vorragende Fortsätze 17 auf.

Der Längsschlitz 14 weist einen vorzugsweise rechteckigen Querschnitt auf, wobei eine quer zur Längsrichtung des Längsschlitzes 14 verlaufende Breite 18 geringfügig kleiner ist, als ein Durchmesser bzw. eine dazu parallel verlaufende Dicke 19 des Drahtbügels 8.

Der Halteteil 12 ist, wie bereits in Fig.1 gezeigt, über die Kleberschicht 6 mit der lingualen oder labialen Oberfläche 9 des Zahns 3 bewegungsverbunden. Die Wähl der Oberfläche 9, an welcher der Zahnaufsatz 5 befestigt wird, ist abhängig von dem angewendeten Regulierungsverfahren.

In Fig.3 ist der Grundkörper 11 in einer Stirnansicht geschnitten dargestellt. Eine Oberfläche 20 des Halteteils 12 ist mit geneigten, gekrümmten bzw. räumlich geformten Auflageflächen 21 versehen, um eine Anpassung an die unterschiedlichen Oberflächenformen der Zähne 3 zu ermöglichen. Die Auflagefläche 21 ist an erhöhten Teilen 22 angeordnet, welche eine Fläche 23 des Grundkörpers 11 um eine Distanz 24 in Richtung des Zahnes 3 überragen. Die einzelnen vorspringenden Teile 22 sind verteilt auf der Fläche 23 angebracht, wodurch sich zwischen diesen Vertiefungen 25 ausbilden, welche zur Aufnahme eines Klebers 26 zur Verbindung des Zahnaufsatzes 5 mit dem Zahn 3 dienen. Der Kleber 26 der Kleberschicht 6 ist hier im Schnittbild schematisch durch Punkte angedeutet. Um für den Träger eines derartigen Zahnaufsatzes 5 während des Tragens der Zahnregulierungsvorrichtung 4 kein besonders störendes Gefühl aufkommenden zu lassen, weist der Zahnaufsatz 5 nur eine geringe Dicke 27 vom Zahn 3 in Richtung Drahtbügel 8 auf, welcher hier strichpunktiert in der Ausnehmung 7 des Längsschlitzes 14 angedeutet ist. Eine Tiefe 28 des Längsschlitzes 14 ist derart ausgebildet, daß einerseits das Material 10 des Grundkörpers 11 noch ausreichende Festigkeit zur Übertragung der Regulierungskräfte vom Drahtbügel 8 auf den Zahn 3 aufweist und andererseits keinen zu großen Abstand des Drahtbügels 8 von der Oberfläche 9 des Zahnes 3 ergibt. Die Tiefe 28 des Längsschlitzes 14 erstreckt sich dabei von einer Frontseite 29 des Zahnaufsatzes 5 in Richtung einer Zahnseite 30.

Eine Grundfläche 31, welche sich in der Tiefe 28 der Ausnehmung 7 in etwa rechtwinkelig zu einer Symmetrieebene 32 in Längsrichtung des Längsschlitzes 14 erstreckt, weist mit einem Radius 33 gerundete Eckbereiche 34 in Richtung von den Längsschlitz 14 bildenden Seitenflächen 35,36 auf, welche parallel zur Symmetrieebene 32 in der Breite 18 voneinander angeordnet sind. Vorzugsweise ist der Radius 33 gering kleiner als der halbe die Dicke 19 bildende Durchmesser des Drahtbügels 8.

Beidseits der Symmetrieebene 32 weist der Führungsteil 13 des Zahnaufsatzes 5 die zuvor bereits beschriebenen Fortsätze 17 auf. Zwischen den Fortsätzen 17 an der Frontseite 29 und einem Steg 37 des Halteteils 12 an der Zahnseite 30 ist parallel zum Längsschlitz 14 je eine Aufnahme 38 zum Haltern eines Fixierelements 39 - welches schematisch strichpunktiert dargestellt ist - vorgesehen. Die Aufnahmen 38 für das Fixierelement 39 erstrecken sich sowohl von einer Oberseite 40 als auch von einer Unterseite 41 des Zahnaufsatzes 5 in Richtung der Symmetrieebene 32 bis zu einer Stärke 42 des Grundkörpers 11. Ausgehend von der Stärke 42 überragen die Fortsätze 17 die Aufnahmen 38 um eine Höhe 43, die so ausgebildet sein muß, daß eine sichere Halterung des Fixierelements 39 erfolgt.

Um von dem am Zahn 3 befestigten Zahnaufsatz 5 der Zahnregulierungsvorrichtung 4 mittels des Drahtbügels 8 eine Zugkraft in Richtung der Frontseite 29 auszuüben, wird das Fixierelement 39 längs der Aufnahmen 38 eingelegt und in Richtung der Symmetrieebene 32 den Drahtbügel 8 von der Frontseite 29 her, überspannend angeordnet. Durch diese Ausführungsform wird der Drahtbügel 8 in einer gesichterten Position im Längsschlitz 14 gehaltert.

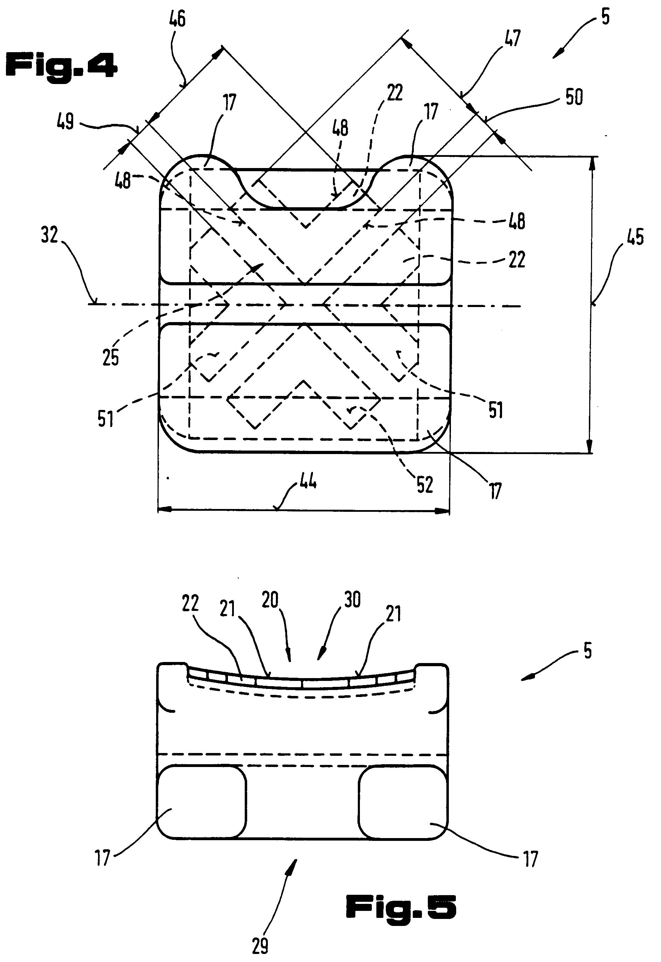

In den Fig.4 und 5 ist der Zahnaufsatz 5 in verschiedenen Ansichten dargestellt. Dabei weist der Zahnaufsatz 5 in Richtung der Symmetrieebene 32 eine Länge 44 sowie eine Höhe 45, welche sich in etwa rechtwinkelig zur Symmetrieebene 32 erstreckt, auf. Die auf der Zahnseite 30 des Zahnaufsatzes 5 angeordneten erhöhten Teile 22 mit ihren Auflageflächen 21 weisen im vorliegenden Ausführungsbeispiel einen in etwa V-förmigen Querschnitt mit Längen 46,47 auf, wobei Seitenkanten 48 um einen Winkel von in etwa 45° gegenüber der Symmetrieebene 32 versetzt sind. Um eine gute Anpassung an die unterschiedlichen Formen der Zähne 3 zu ermöglichen, sind die Auflageflächen 21 der erhöhten Teile 22 räumlich geformt ausgeführt.

Die Seitenkanten 48 der einzelnen erhöhten Teile 22 sind jeweils um Abstände 49,50 voneinander distanziert und bilden somit Oberflächen 51,52 in einer V-Rasteranordnung aus. Dadurch werden die auf der Zahnseite 30 des Zahnaufsatzes 5 notwendigen Vertiefungen 25 zwischen den Oberflächen 51,52 zur Aufnahme des Klebers 26 gebildet.

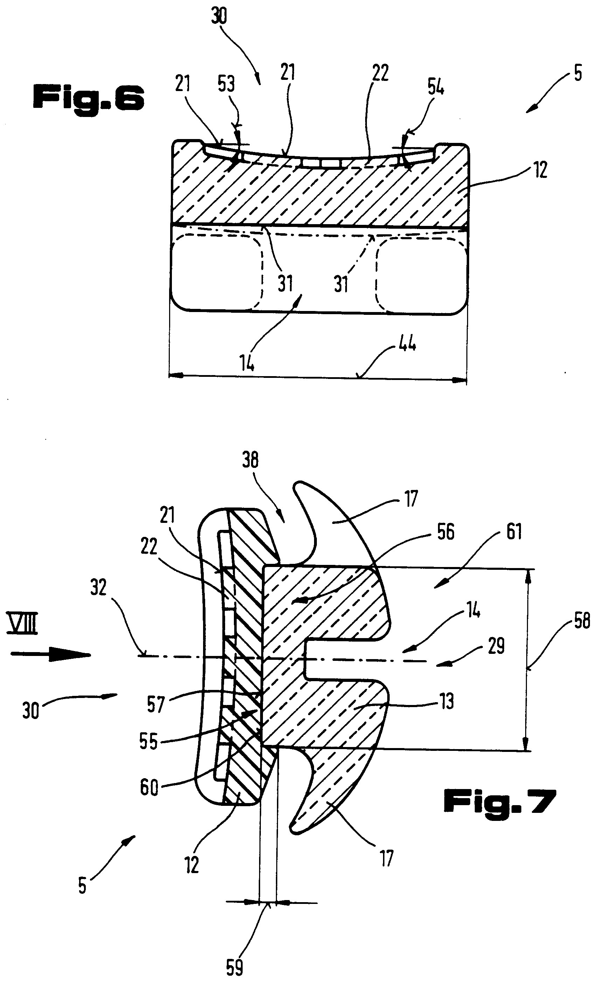

In Fig.6 ist der Zahnaufsatz 5 in der Symmetrieebene 32 geschnitten dargestellt. Dabei ist die Ausbildung der räumlich gekrümmten Auflageflächen 21 an den erhöhten Teilen 22 an der Zahnseite 30 besonders gut zu erkennen.

Die Auflageflächen 21 sind dabei um Winkel 53,54 auf eine parallel zur Grundfläche 31 verlaufenden Bezugsebene verschwenkt angeordnet.

Die Grundfläche 31 des Längsschlitzes 14 ist hier im vorliegenden Ausführungsbeispiel geradlinig über die Länge 44 des Zahnaufsatzes 5 ausgebildet. Es ist aber auch ebenso möglich, die Grundfläche 31 - wie dies hier mit strichpunktierten Linien schematisch angedeutet ist - in Form eines Kreisbogenabschnitts, Ellipsenabschnitts oder einer anderen Kurvenform auszubilden. Dies ist sowohl vom Zusammenwirken des Drahtbügels 8 mit dem Längsschlitz 14, als auch dem gewünschten Einsatzzweck der Zahnregulierungsvorrichtung 4 abhängig.

In Fig.7 ist eine Ausführungsvariante des Zahnaufsatzes 5 dargestellt, bei der dieser mehrteilig ausgeführt ist. Dabei ist der Halteteil 12 vorzugsweise aus Kunststoff und der Führungsteil 13 vorzugsweise aus Keramikmaterial gebildet. Ein Verbindungsbereich 55 zwischen dem Halteteil 12 und dem Führungsteil 13 ist in Art einer Nut- Federverbindung 56 ausgebildet, wobei eine Nut 57 im Halteteil 12 eine Breite 58 sowie eine Tiefe 59 aufweist.

Der Halteteil 12 kann z.B. mittels eines Strangpreßvorganges, Spritzgußvorgangs oder ähnlichem hergestellt sein, wobei eventuell die Zahnseite 30 in einem eigenen nachträglichen Bearbeitungsvorgang die entsprechende Formausbildung erhält und anschließend mittels einer Kleberschicht 60 mit dem fertigen aus Keramikmaterial bestehenden Führungsteil 13, welcher einen Aufsatzkörper 61 bildet, zu einer Einheit zusammengefügt wird. Die Verbindung zwischen dem Halteteil 12 und dem Aufsatzkörper 61 kann z.B. auch durch einen Schweißvorgang oder auch formschlüssig erfolgen.

Die formmäßige Ausbildung der Fortsätze 17, des Längsschlitzes 14, der Aufnahmen 38, sowie der erhöhten Teile 22 mit den Auflageflächen 21 kann den bereits zuvor beschriebenen Ausführungsformen entsprechen.

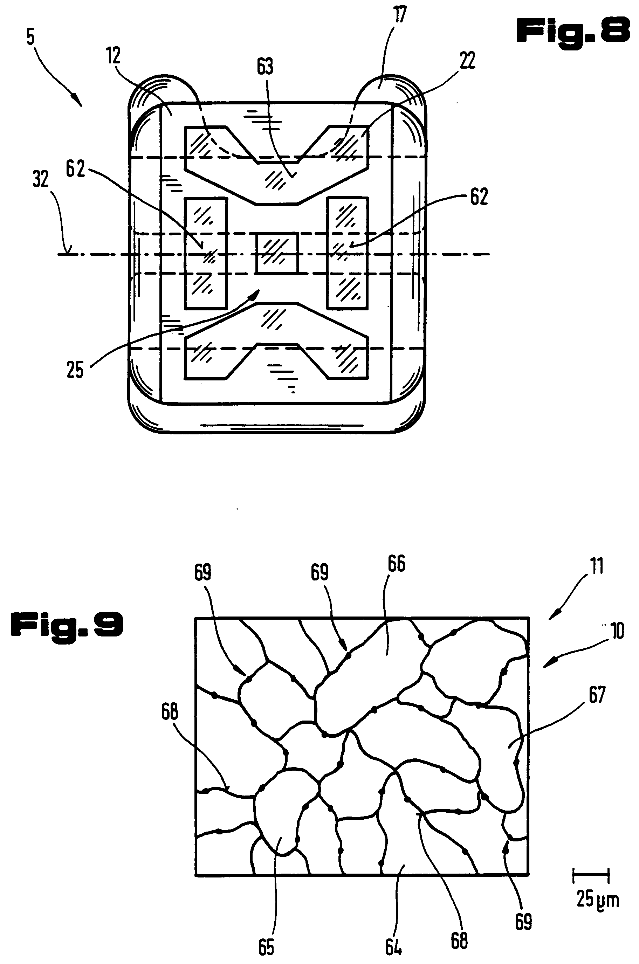

Die Fig.8 zeigt die Zahnseite 30 des Halteteils 12 für den Zahnaufsatz 5. Die erhöhten Teile 22 weisen eine in etwa V-förmige bzw. rechteckige Anordnung auf. Durch die Anordnung der erhöhten Teile 22 an der Zahnseite 30 des Zahnaufsatzes 5 werden Auflageflächen 62,63 gebildet, zwischen denen die Vertiefungen 25 zur Aufnahme des Klebers 26 angeordnet sind.

In Fig.9 ist die Feinstruktur des Gefügeaufbaus des Grundkörpers 11 aus Keramikmaterial in stark vergrößerter Darstellung gezeigt. Das Material 10 ist aus den einzelnen Körnern 64 bis 67 zusammengesetzt, wobei sich an Korngrenzen 68 Ausscheidungen 69 ausbilden, welche sich gegenüber den Körnern 64 bis 67 durch ihre Sichtbarkeit unter Röntgenstrahlen unterscheiden. Dadurch ist es nunmehr möglich, wenn z.B. ein Teil des Zahnaufsatzes 5 vom Träger einer derartigen Zahnregulierungsvorrichtung 4 unbeabsichtigt ins Körperinnere gelangt, dieses Stück mittels Röntgenstrahlen im Körper desselben zu orten.

Der Grundkörper 11 bei dem beschriebenen Zahnaufsatz 5 besteht aus Keramikmaterial.

Die Herstellung des Grundkörpers 11 bzw. des Halte- oder Aufsatzteils aus Keramikmaterial kann dabei entsprechend den aus dem Stand der Technik bekannten Verfahren, wie sie unter anderem in den US-Patenten 3 026 210, 3 026 177, 4 150 317 und 4 954 080 beschrieben sind, erfolgen.

Die aus Kerarmikmaterial hergestellten Zahnaufsätze 5 werden üblicher Weise aus einem hochreinem Aluminiumoxydpulver, einem Bindemittel, Zusatzmaterialien zur Verminderung des Kornwachstums, und röntgenopaken Oxyden hergestellt. Die so erzielte Masse wird in die gewünschte Form für einen Grünkörper verformt. Dazu wird das trockene Pulver in einem Formhohlraum mit einer Puderverdichtungspresse gepreßt. Es ist aber auch möglich das semitrockene Material durch Preßformverfahren oder Spritzgußverfahren in die benötigten Körperformen zu verformen. Eine andere bevorzugte Methode ist das Keramikgrundmaterial in die gewünschte Form zu extrudieren, wobei eine endgültige, maschinelle Formgebung vor oder nach dem Sinterungsprozeß erfolgen kann.

Danach wird der Grünkörper unter Zusatz von sauerstoffangereicherter Luft für ca. 1 Stunde bei 1.200 Grad Celsius vorgebrannt, sodaß der Grünkörper eine ausreichende Festigkeit für die maschinelle Bearbeitung bzw. für den Transfer zu dem Sinterungsprozeß aufweist.

Das Sintern des Grünkörpers auf die gewünschte Dichte kann beispielsweise unter einer Reduktionsatmosphäre, wie Wasserstoff bei Temperaturen zwischen 1.750 und 1.950 Grad C erfolgen. Die Zeitdauer für die Sinterung kann zwischen 45 min. und einigen Stunden betragen, um eine durchschnittliche Korngröße zwischen 5 und 40 Mikrometer und eine gewünschte Lichtdurchlässigkeit zu erreichen. Eine Scheibe des fertigen Grundkörpers 11 mit einer Dicke von 0,5 mm sollte eine Lichtdurchlässigkeit bei sichtbarem Licht mit einer Wellenlänge von 0,3 bis 0,8 Mikrons von 5 bis 45 % aufweisen. Um die Porösität des Grundkörpers zu reduzieren, erfolgt ein Heißisostatikpressen, während welchem für eine gewisse Zeit bei einer Temperatur zwischen 1450 und 1580 Grad C ein Druck von etwa 30.000 psi aufgebracht wird, um den Porenanteil im Grundkörper 11 Vₚ unter 0,003 abzusenken.

Um dem fertigen Produkt eine glatte Oberfläche zu verleihen, kann dieses mechanisch oder chemisch poliert werden, wie dies unter anderem im US-Patent 4 079 167 beschrieben ist. Dadurch kann auch die optische Durchlässigkeit des Zahnaufsatzes 5 erhöht werden. Um entsprechend der vorliegenden Erfindung einen polykristallinen Grundkörper 11 mit einer entsprechenden röntgenopaken Ausbildung und optischen Eigenschaften zu schaffen, wird ein hochreines Aluminiumoxydpulver mit einem Reinheitsgrad größer 99,98 % und einer Korngröße im Bereich von 0,050 bis 0,15 Mikron und einer Agglomeratverteilung kleiner als 5 Mikrometer verwendet.

Dem vorgenannten Aluminiumpulver ist ein Magnesiumoxyd im Gehalt von unter 0,1 Gew% zugesetzt, um die Bildung einer Magnesium-Aluminium-Spinellphase (Mg Al₂ O₄) und gleichzeitig ein zu starkes Kornwachstum zu verhindern.

Desweiteren wird in einem entsprechenden Ausmaß zwischen 0,01 und 0,5 Gew% auch ein Magnesiumfluorid dem vorgenannten Gemisch bevorzugt zugesetzt. Diese Magnesiumfluorid begrenzt ebenfalls das Kornwachstum in der frühen Phase des Sintervorganges und wird danach während der späten Phase des Brennvorganges durch Verdampfen ausgeschieden. Vorteilhaft ist es aber auch, wenn ein Anteil von 5 bis 15 ppm hochreines Lanthaniumoxyd zugesetzt wird, da dies in der Magnesium-Aluminium-Spinellphase zu einer höheren Lichtdurchlässigkeit des Zahnaufsatzes führt.

Die gewünschte röntgenopake Ausbildung des Grundkörpers 11 wird durch das Zumischen von einer Menge von 3 bis 150 ppm Ytterbiumfluorid mit einem Reinheitsgrad größer als 99 % und einer Korngrößenverteilung unter 7 Mikrometer, sowie 60 bis 120 ppm hochreines Yttriumoxyd und 3 bis 30 ppm hochreines Lanthanaoxyd erreicht. Es ist auch möglich, eine kleine Menge eines geeigneten organischen Bindemittels einzusetzen, um dieser gesamten Mischung eine ausreichende Festigkeit in der Grünphase zu verleihen.

Für die farbliche Gestaltung kann den Ausgangsmaterialien für die Herstellung des Grundkörpers 11 ein Metalloxyd, wie z.B. Chromoxyd, beigemengt werden, um so das erwünschte Aussehen zu erreichen. Damit kann auf die unterschiedlichen Farbtöne der Zähne 3 des Trägers einer derartigen Zahnregulierungsvorrichtung 4 Rücksicht genommen werden. Es ist aber auch ebenso möglich, durch die Beimengung verschiedenartigster Metalloxyde Zahnaufsätze 5 mit unterschiedlicher Farbgebung zu schaffen.

Selbstverständlich können die einzelnen vorstehend beschriebenen Ausführungsbeispiele und die in diesen Ausführungsbeispielen gezeigten Varianten und unterschiedlichen Ausführungen jeweils für sich eigenständige, erfinderische Lösungen bilden und beliebig miteinander kombiniert werden.

Abschließend sei der Ordnung halber darauf hingewiesen, daß zum besseren Verständnis der Funktion der erfindungsgemäßen Zahnregulierungsvorrichtung viele Teile derselben schematisch und unproportional vergrößert dargestellt sind.

## Patentansprüche

1. Zahnregulierungsvorrichtung (4) mit einem keramischen Zahnaufsatz (5) aus einem polykristallinen keramischen Gefüge und verschiedenen Zuschlagstoffen mit einer optischen Durchlässigkeit für sichtbares Licht bei einer Dicke von 0,5 mm zwischen 5 und 60 %, dadurch gekennzeichnet, daß an den Korngrenzen (68) zwischen den polykristallinen Körnern (64 bis 67) röntgensichtbare Ausscheidungen (69) angeordnet sind, wobei die Körner (64 bis 67) eines Grundkörpers (11) aus einem hochreinen Zirkon oder wie an sich bekannt, einem Aluminiumoxyd und verschiedenen Zuschlagstoffen bestehen können und daß die röntgensichtbaren Ausscheidungen (69) durch Beimengung von 3 bis 150 ppm Ytterbiumfluorid gebildet sind.

2. Zahnregulierungsvorrichtung nach Anspruch 1, dadurch gekennzeichnet, daß dem Aluminiumoxyd des Zahnaufsatzes (5) 60 bis 120 ppm hochreines Yttriumoxyd und/oder 3 bis 30 ppm hochreines Lanthanaoxyd zugesetzt ist.

3. Zahnregulierungsvorrichtung nach Anspruch 1 oder 2, dadurch gekennzeichnet, daß der gebrannte Zahnaufsatz (5) eine durchschnittliche Korngöße von 5 bis 90 Mikrometern aufweist.

4. Zahnregulierungsvorrichtung nach einem oder mehreren der Ansprüche 1 bis 3, dadurch gekennzeichnet, daß das durchschnittliche Volumen der Poren Vₚ unter 0,003 ist.

5. Zahnregulierungsvorrichtung nach einem oder mehreren der Ansprüche 1 bis 4, dadurch gekennzeichnet, daß ein Zusatzstoff für das Kornwachstum unter 0,1 Gew% hochreines Magnesiumoxyd und/oder 0,01 bis 0,5 Gew% Magnesiumfluorid enthält.

6. Zahnregulierungsvorrichtung nach einem oder mehreren der Ansprüche 1 bis 5, dadurch gekennzeichnet, daß dem keramischen Material des Zahnaufsatzes (5) 5 ppm bis 15 ppm Lithiumfluorid zugesetzt ist.

7. Zahnregulierungsvorrichtung nach einem oder mehreren der Ansprüche 1 bis 6, dadurch gekennzeichnet, daß das Grundgefüge aus einem hochreinen Yttriumoxyd besteht.

8. Zahnregulierungsvorrichtung nach einem oder mehreren der Ansprüche 1 bis 7, dadurch gekennzeichnet, daß das Grundgefüge aus einem Gemisch aus Bleititanatzirkonat modifiziert mit 3 bis 150 ppm Lanthana, Ytterbiumfluorid und 3 bis 30 ppm Yttriumoxyd besteht.

9. Zahnregulierungsvorrichtung nach einem oder mehreren der Ansprüche 1 bis 8, dadurch gekennzeichnet, daß das Grundgefüge aus einer Al₂0₃- Polykristallin stabilisierten Zirkonkeramik und den durch Ytterbiumfluorid und Lanthana gebildeten Zusatzstoffen besteht.

10. Zahnregulierungsvorrichtung nach einem oder mehreren der Ansprüche 1 bis 9, dadurch gekennzeichnet, daß die polykristallinen Körner (64 bis 67) mit an ihren Korngrenzen (68) röntgensichtbaren Ausscheidungen (69) den Grundkörper (11) und/oder einen Aufsatzkörper (61) eines zumindest zweiteiligen Zahnaufsatzes (5) bilden.

11. Zahnregulierungsvorrichtung nach einem oder mehreren der Ansprüche 1 bis 10, dadurch gekennzeichnet, daß der Grundkörper (11) oder der Aufsatzkörper (61) des Zahnaufsatzes (5) aus Kunststoff besteht.

12. Zahnregulierungsvorrichtung nach einem oder mehreren der Ansprüche 1 bis 11, dadurch gekennzeichnet, daß der aus den polykristallinen Körnern (64 bis 67) mit an den Korngrenzen (68) röntgensichtbaren Ausscheidungen (69) bestehende Grund- oder Aufsatzkörper (11,61) in einem aus einem anderen Material bestehenden Aufsatz- oder Grundkörper (61,11) eingebettet bzw. formschlüssig mit diesem verbunden ist.

13. Zahnregulierungsvorrichtung nach einem oder mehreren der Ansprüche 1 bis 12, dadurch gekennzeichnet, daß der Grundkörper (11) räumlich gekrümmte Auflageflächen (21,62,63) bzw. Oberflächen (51,52) aufweist, die bevorzugt für chemische oder mechanische Verbindung vorbereitet sind.

14. Zahnregulierungsvorrichtung nach einem oder mehreren der Ansprüche 1 bis 13, dadurch gekennzeichnet, daß eine einen Kleber (26) aufnehmende Oberfläche (20) mit zwischen Vertiefungen (25) angeordneten erhöhten Teilen (22) ausgestattet ist.

15. Zahnregulierungsvorrichtung nach einem oder mehreren der Ansprüche 1 bis 14, dadurch gekennzeichnet, daß der Aufsatzkörper (61) bogenförmige Ausnehmungen, Schlitze, Flügel und/oder Haken aufweist.

16. Zahnregulierungsvorrichtung nach einem oder mehreren der Ansprüche 1 bis 15, dadurch gekennzeichnet, daß die Oberfläche des aus polykristallinen Körnern (64 bis 67) bestehenden Zahnaufsatzes (5) chemisch und/oder mechanisch poliert ist.

17. Zahnregulierungsvorrichtung nach einem oder mehreren der Ansprüche 1 bis 16, dadurch gekennzeichnet, daß der keramische Grundkörper (11) eine farbige Transluszenz aufweist.

18. Zahnregulierungsvorrichtung nach einem oder mehreren der Ansprüche 1 bis 17, dadurch gekennzeichnet, daß der keramische Grundkörper (11) mit einem Metalloxyd für die Farbgebung, z.B. Chromoxyd, versetzt ist.

## Claims

1. Orthodontic device (4) with a ceramic tooth attachment (5) of a polycrystalline ceramic structure and various additives with an optical transmittance in the visible spectrum at a thickness of 0,5 mm, in the range of from 5 to 60%, characterized in that on the grain boundaries (68) X-ray visible precipitations (69) are arranged between the polycrystalline grains (64 to 67), wherein the grains (64 to 67) of a base body (11) can consist of a high purity zircon, and as is well known, an aluminium oxide and different additives, and in that the X-ray visible precipitations (69) are formed by adding an ytterbium fluoride of 3 to 150 ppm.

2. Orthodontic device according to Claim 1, characterized in that 60 to 120 ppm high-purity yttrium oxide and/or 3 to 30 ppm high-purity lanthanum oxide is added to the aluminium oxide of the tooth attachment (5).

3. Orthodontic device according to Claim 1 or 2, characterized in that the fired tooth attachment (5) has an average grain size in the range of from 5 to 90 micrometers.

4. Orthodontic device according to one or more of Claims 1 to 3, characterized in that the average volume of the pores Vp is below 0,003.

5. Orthodontic device according to one or more of Claims 1 to 4, characterized in that an additive for the grain growth contains less than 0,1% by weight of high-purity magnesium oxide and/or 0,01 to 0,5% by weight of magnesium fluoride.

6. Orthodontic device according to one or more of Claims 1 to 5, characterized in that 5 ppm to 15 ppm lithium fluoride is added to the ceramic material of the tooth attachment (5).

7. Orthodontic device according to one or more of Claims 1 to 6, characterized in that the base structure consists of high-purity yttrium oxide.

8. Orthodontic device according to one or more of Claims 1 to 7, characterized in that the base structure consists of a mixture of lead titanate zirconate which is modified with 3 to 150 ppm lanthanum, ytterbium fluoride and 3 to 30 ppm yttrium oxide.

9. Orthodontic device according to one or more of Claims 1 to 8, characterized in that the base structure consists of an Al₂O₃ polycrystalline stabilized zircon ceramic and the additives formed by the yttrium fluoride and lanthanum.

10. Orthodontic device according to one or more of Claims 1 to 9, characterized in that the polycrystalline grains (64 to 67) form together with their X-ray visible precipitations (69) on their grain boundaries (68) the base body (11) and/or an attachment body (61) of a tooth attachment (5) which consists at least of two parts.

11. Orthodontic device according to one or more of Claims 1 to 10, characterized in that the base body (11) or the attachment body (61) of the tooth attachment (5) consists of plastic material.

12. Orthodontic device according to one or more of Claims 1 to 11, characterized in that the base or attachment body (11, 61) consisting of polycrystalline grains (64 to 67) having X-ray visible precipitations (69) on the grain boundaries (68), is embedded in or respectively connected in a form-locking manner with an attachment or base body (61, 11) that consists of another material.

13. Orthodontic device according to one or more of Claims 1 to 12, characterized in that the base body (11) has three-dimensionally arched contact surfaces (21, 62, 63) or respectively surfaces (51, 52), which are preferably prepared for a chemical or mechanical connection.

14. Orthodontic device according to one or more of Claims 1 to 13, characterized in that a surface (20) receiving an adhesive (26) is provided with raised parts (22) arranged between depressions (25).

15. Orthodontic device according to one or more of Claims 1 to 14, characterized in that the attachment body (61) has arch-shaped recesses, slots, wings and/or hooks.

16. Orthodontic device according to one or more of Claims 1 to 15, characterized in that the surface of the tooth attachment (5) which consists of polycrystalline grains (64 to 67) is chemically and/or mechanically polished.

17. Orthodontic device according to one or more of Claims 1 to 16, characterized in that the ceramic base body (11) has a coloured translucency.

18. Orthodontic device according to one or more of Claims 1 to 17, characterized in that a metallic oxide, for example chromium oxide, is added to the ceramic base body (11) to provide colour.

## Revendications

1. Dispositif régulateur des dents (4) avec des bagues dentaires céramiques (5) en une structure céramique polycristalline et divers agrégats avec une transparence optique pour la lumière visible pour une épaisseur de 0,5 mm comprise entre 5 et 60%, caractérisé en ce que sont disposées aux périphéries des grains (68) entre les grains polycristallins (64 à 67) des dépôts (69) visibles aux rayons X, les grains (64 à 67) d'un corps de base (11) pouvant être constitués d'une Zircone de grande pureté ou, comme cela est connu en soi, d'un oxyde d'aluminium et de différents agrégats, et en ce que les dépôts (69) visibles aux rayons X sont constitués par addition de 3 à 150 ppm de fluorure de ytterbium.

2. Dispositif régulateur des dents selon la revendication 1, caractérisé en ce qu'on ajoute à l'oxyde d'aluminium des bagues dentaires (5) 60 à 120 ppm d'oxyde d'yttrium de grande pureté et/ou 3 à 30 ppm d'oxyde de lanthane de grande pureté.

3. Dispositif régulateur des dents selon la revendication 1 ou 2, caractérisé en ce que les bagues dentaires cuites (5) ont une grandeur de grain moyenne de 5 à 90 micromètres.

4. Dispositif régulateur des dents selon l'une ou plusieurs des revendications 1 à 3, caractérisé en ce que le volume moyen des pores Vp est inférieur à 0,003.

5. Dispositif régulateur des dents selon une ou plusieurs des revendications 1 à 4, caractérisé en ce qu'un agrégat pour la croissance des grains contient moins que 0,1% en poids d'oxyde de magnésium de grande pureté et/ou 0,01 à 0,5% en poids de fluorure de magnésium.

6. Dispositif régulateur des dents selon l'une ou plusieurs des revendications 1 à 5, caractérisé en ce qu'on ajoute à la matière céramique des bagues dentaires (5) 5 ppm à 15 ppm de fluorure de lithium.

7. Dispositif régulateur des dents selon l'une ou plusieurs des revendications 1 à 6, caractérisé en ce que la structure de base est constituée d'un oxyde d'yttrium de grande pureté.

8. Dispositif régulateur des dents selon l'une ou plusieurs des revendications 1 à 7, caractérisé en ce que la structure de base est constituée d'un mélange de titano-zirconate de plomb modifié avec 3 à 150 ppm de lanthane, de fluorure d'ytterbium et de 3 à 30 ppm d'oxyde d'yttrium.

9. Dispositif régulateur des dents selon l'une ou plusieurs des revendications 1 à 8, caractérisé en ce que la structure de base est constituée d'une céramique de zircone stabilisée avec un polycristallin de Al₂O₃ et des agrégats constitués par le fluorure d'ytterbium et le lanthane.

10. Dispositif régulateur des dents selon l'une ou plusieurs des revendications 1 à 9, caractérisé en ce que les grains polycristallins (64 à 67), avec leur dépôt (69) visible aux rayons X aux périphéries des grains (68) constituent le corps de base (11) et/ou un corps rapporté (61) d'une bague dentaire (5) constituée au moins de deux parties.

11. Dispositif régulateur des dents selon l'une ou plusieurs des revendications 1 à 10, caractérisé en ce que le corps de base (11) ou le corps rapporté (61) de la bague dentaire (5) est réalisé en matière synthétique.

12. Dispositif régulateur des dents selon l'une ou plusieurs des revendications 1 à 11, caractérisé en ce que le corps de base ou rapporté (11, 61) constitué des grains polycristallins (64 à 67) avec les dépôts (69) visibles aux rayons X aux périphéries (68) des grains est noyés dans ou reliés par concordance des formes à un corps rapporté ou de base (61, 11) constitué d'un autre matériau.

13. Dispositif régulateur des dents selon l'une ou plusieurs des revendications 1 à 12, caractérisé en ce que le corps de base (11) présente des surfaces d'appui (21, 62, 63) ou surfaces (51, 52) courbées spatialement qui sont préparées de préférence pour une liaison chimique ou mécanique.

14. Dispositif régulateur des dents selon l'une ou plusieurs des revendications 1 à 13, caractérisé en ce qu'une surface (20) recevant une colle (26) présente des parties surélevées (22) disposées entre des creux (25).

15. Dispositif régulateur des dents selon l'une ou plusieurs des revendications 1 à 14, caractérisé en ce que le corps rapporté (61) présente des évidements courbés, des fentes, des ailes et/ou des crochets.

16. Dispositif régulateur des dents selon l'une ou plusieurs des revendications 1 à 15, caractérisé en ce que la surface de la bague dentaire (5) constituée de corps polycristallins (64 à 67) est polie chimiquement et/ou mécaniquement.

17. Dispositif régulateur des dents selon l'une ou plusieurs des revendications 1 à 16, caractérisé en ce que le corps de base céramique (11) présente une translucidité colorée.

18. Dispositif régulateur des dents selon l'une ou plusieurs des revendications 1 à 17, caractérisé en ce que le corps de base céramique (11) est mélangé avec un oxyde métallique pour la coloration, par exemple avec un oxyde de chrome.
